# EUROPEAN PATENT SPECIFICATION

(11) **EP 3 233 409 B1**
(45) Date of publication and mention of the grant of the patent: **17.09.2025**
(21) Application number: 15831229.8
(22) Date of filing: 04.12.2015
(51) Int. Cl.: B29C 45/16, F16L 15/04, B29D 99/00, B29L 31/24, B29L 31/26

(54) **METHOD FOR EMBEDDING ELASTOMER SEALING MATERIALS ON THE THREADS OF PLASTIC FITTINGS USING TWO STAGE INJECTION MOULDING**
VERFAHREN ZUM EINBETTEN VON ELASTOMERDICHTUNGEN AUF DIE GEWINDEN VON KUNSTSTOFF-FORMSTÜCKEN IN EINEM ZWEISTUFIGEN SPRITZGIESSVERFAHREN
PROCÉDÉ D'INCORPORATION DES SCELLEMENTS EN ÉLASTOMÈRE SUR LES FILETAGES DE RACCORDS PLASTIQUES EN UTILISANT MOULAGE PAR INJECTION EN DEUX PHASES

(30) Priority: 05.12.2014 US 201462087901 P
(43) Date of publication of application: 25.10.2017
(73) Proprietor: Elysee Piping Systems Limited, London NW8 9TT (GB)
(72) Inventor: PROTOPAPAS, Panos, 1022 Nicosia (CY)
(74) Representative: Müller Schupfner & Partner Patent- und Rechtsanwaltspartnerschaft mbB (Muc)
(86) International application number: PCT/IB2015/002305
(87) International publication number: WO 2016/087929

(56) References cited:
- EP-A1- 0 647 810
- WO-A2-2009/024295
- US-A- 5 234 765
- US-A1- 2006 208 429
- US-B1- 6 361 083
- US-B1- 6 916 248

## Description

### BACKGROUND

Traditionally plastic fittings are produced using standard injection molding technology where the whole body of the fitting and the threads are produced in one operation using one hard plastic material. The technical properties of the fittings are optimized to strengthen the body of the fitting according to standards, with respect to stand pressures, impacts and long-term use in different environment and temperatures. Since the materials are optimized for strength and hardness, additional sealing materials are added to ensure sealing of the threads of the fittings after assembly. To seal the connection during the assembly of the two fittings, a sealing material such as Polytetrafluoroethylene (PTFE) sealing tape or cords, thread glue or traditional hemp or non-curing sealing compound is used. The sealing material is covering the area where the threads of the one fitting interfere with the threads of the other fitting. During assembly, the sealing material is being squeezed by the fitting and thus creating a sealing compound.

Adding sealing material through the installation process of the fitting is time consuming and prone for error. If the sealing material is not applied correctly or is not in the correct position after the assembly of the fittings, the sealing area will leak. Furthermore, in the case that the fittings are disassembled, the sealing material has to be substituted with a new one.

EP 0 647 810 A1 discloses a connector with a first fitting, comprising an external thread and a second fitting comprising an internal thread, wherein a sealing sleeve element is provided which is mounted at the first fitting and has an inner shape corresponding to the external thread.

US 2006 208 429 A1 discloses a seal assembly for effecting a fluid tight seal between a pipe and an opening in the wall of a structure. The seal assembly includes a seal ring and an annular nut. The seal ring includes a relatively rigid fastener component having external threads, and a relatively resilient sealing component joined to the fastener component and including a first sealing projection for providing a compressive seal between the seal ring and one side of the structure wall, and a second annular sealing projection for providing a compressive seal between the seal ring and the outer surface of a pipe inserted through the seal ring. The seal ring is inserted through the opening in the structure, and the annular nut is threaded onto the external threads of the fastener component and into engagement with a first side of the wall to thereby compress the first sealing projection against the opposite, second side of the wall. Thereafter, a pipe is inserted through the seal ring to compress the second sealing projection between the outer surface of the pipe and the seal ring.

### STATEMENT OF INVENTION

The invention will be described in further detail below with reference to the attached drawings in which:

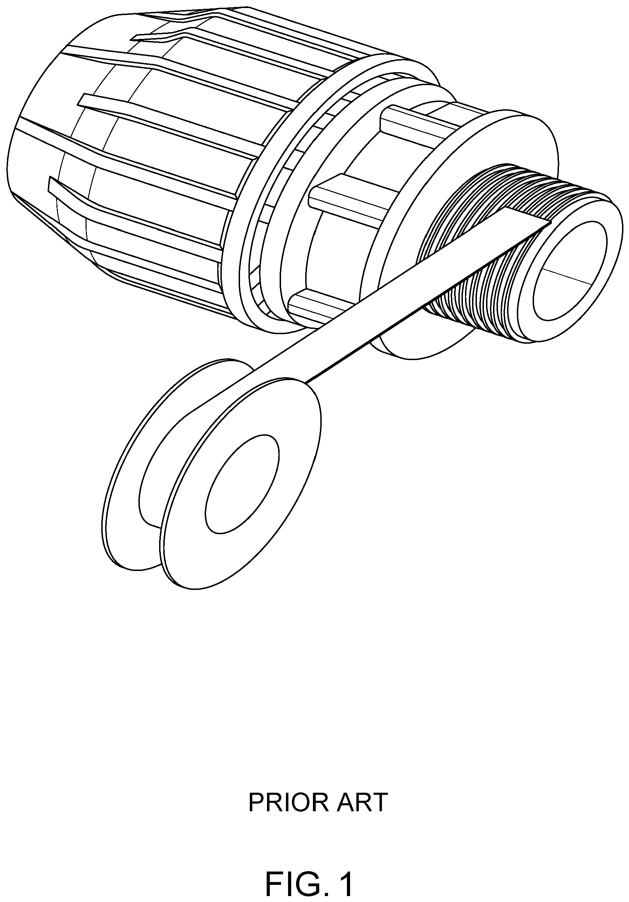

Fig. 1. illustrates a connection fitting according to the prior art;
Fig. 2. illustrates the invention embedded on a fitting;

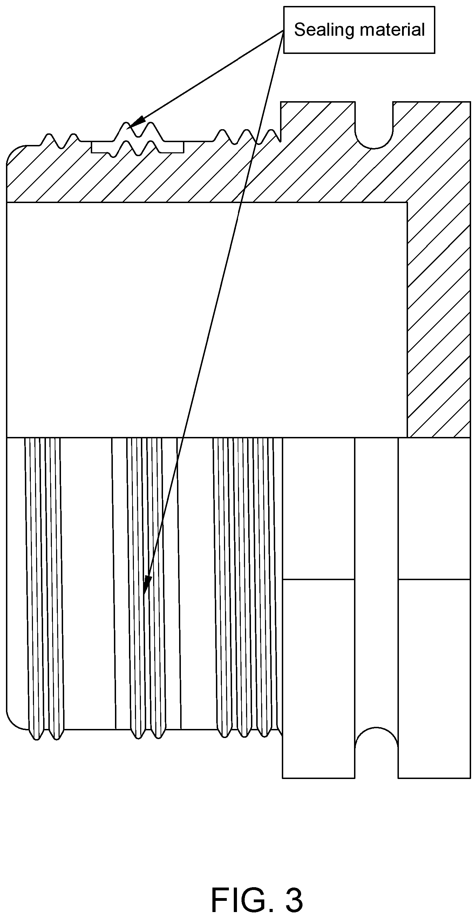

Fig. 3. illustrates a cross-sectional side view of the application of the invention;
Fig- 4. illustrates the part after the first injection stage;
Fig. 5. illustrates the part after the second injection stage;
Fig. 6. illustrates a cross section of the thread after the first injection stage;
Fig. 7. illustrates a cross section of the thread after the second injection stage;
Fig. 8. Illustrates a cross section of the threads after assembly with another part.

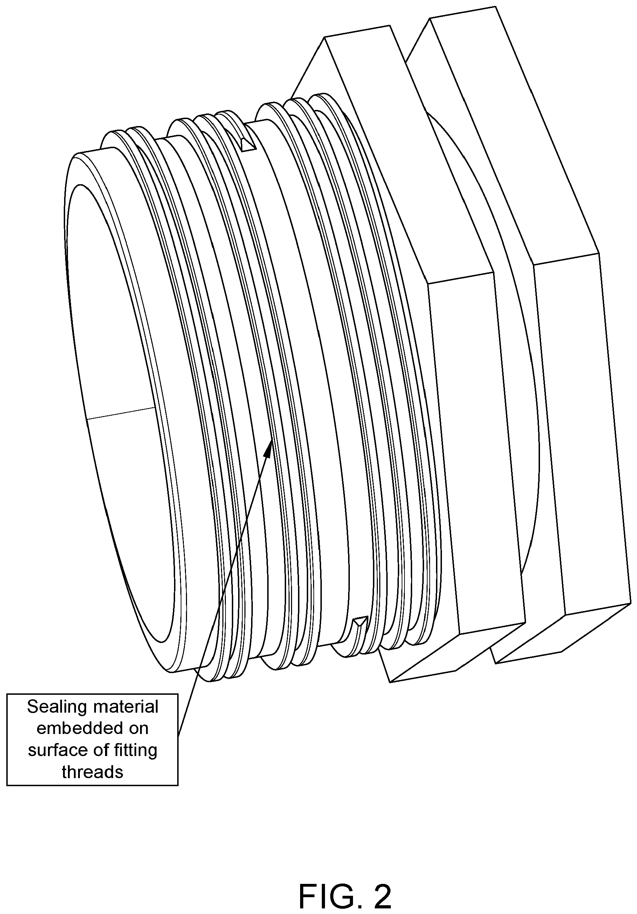

As shown in Fig. 2, the new invention is a way to embed Elastomer sealing material directly on the threads of the fitting during the production (injection process) of the fitting so that there is no need to apply additional sealing material during installation of the fitting.

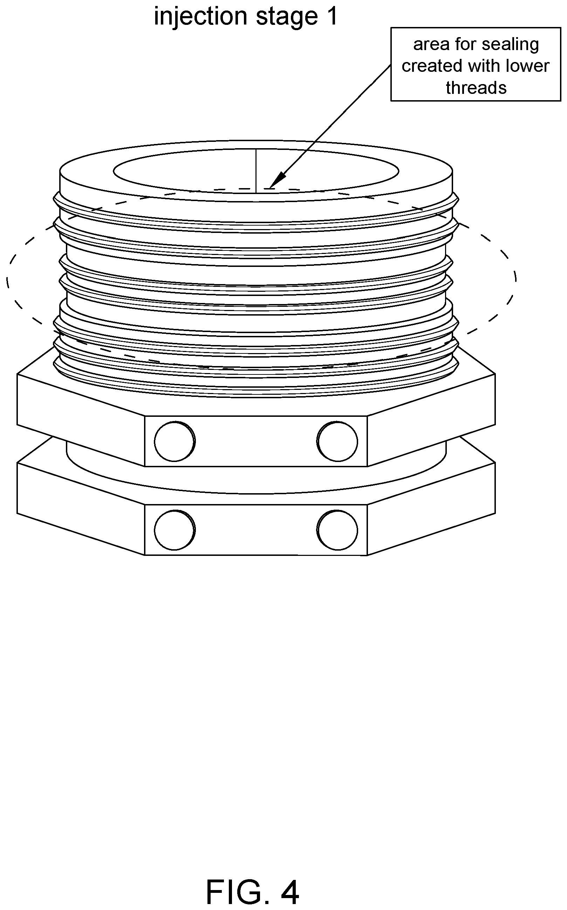

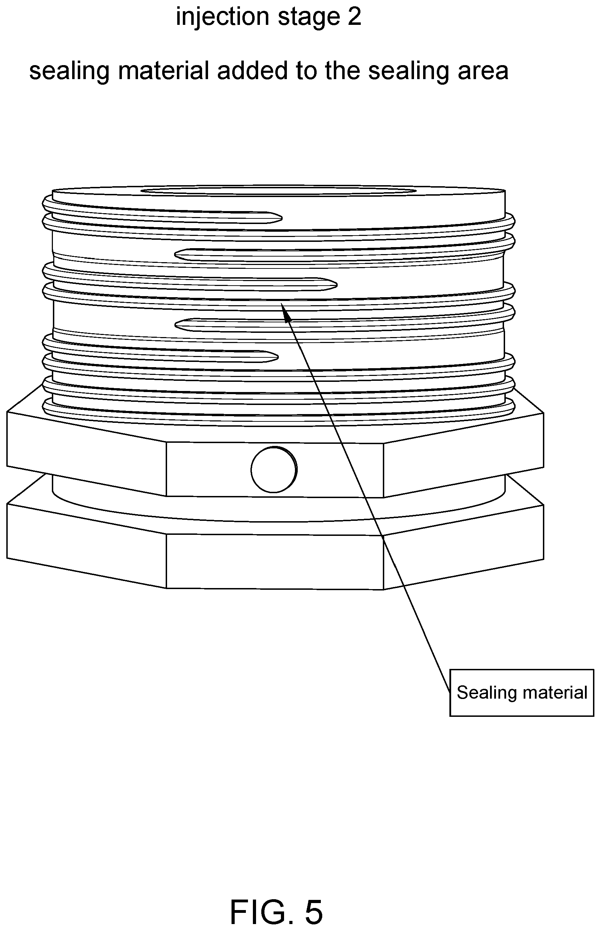

The method for producing the fittings with the sealing material is utilizing a two stage injection process where the body of the fitting is produced in two stages with two different materials:
1. The first stage of the injection process is using the normal plastic material and forming the body and the threads of the fitting with the technical properties required according to standards. The result of 1^{st} stage can be seen in Fig. 4.
2. During the second stage, the Elastomer sealing material is added on the threads and is adhered to the body by the heat of the melted Elastomer sealing material, so that the two materials become attached. The result of 2^{nd} stage can be seen in Fig. 5.

This way, the Elastomer sealing material is embedded in the product and the Elastomer sealing material is always in the best position to ensure the optimal sealing of the threads between the two fittings being assembled.

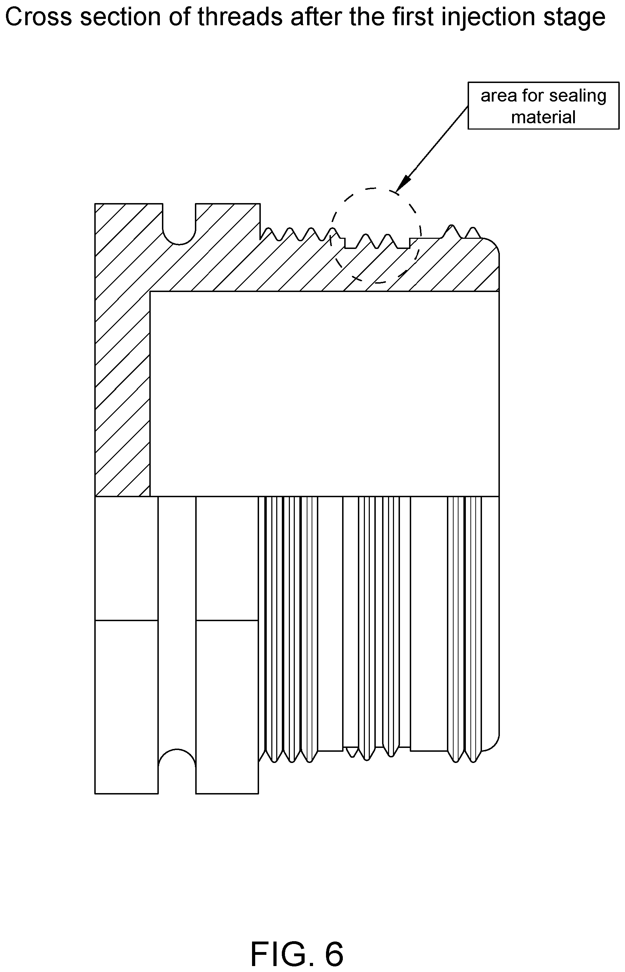

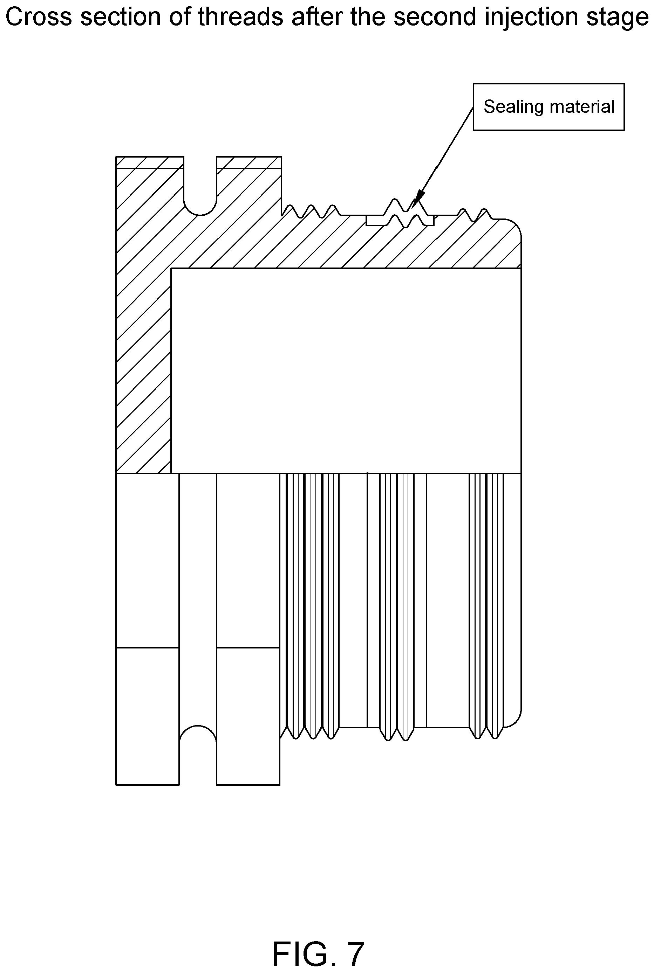

To strengthen the threads in the sealing area, so that they are rigid enough to ensure proper sealing, a supportive thread which is lower than the normal thread is designed to be under the Elastomer sealing material. This thread is created together with the main body during the first injection stage (see Fig. 6). The Elastomer sealing material is then injected on top of this lower thread in the second injection stage, with a height higher than the normal threads (see Fig. 7), so that the Elastomer sealing material fills the gap between the threads of the two fittings when they are assembled, ensuring proper sealing between the two fittings.

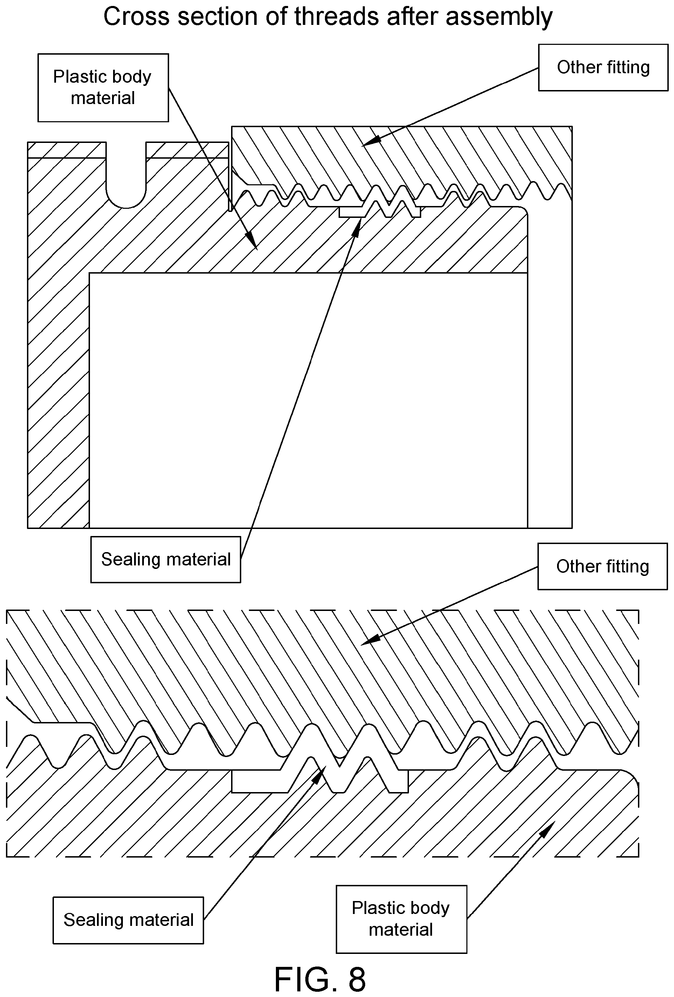

Thickness, shape and properties of the Elastomer sealing material are optimised to achieve ideal sealing interference, without increasing the required operational torque required for assembly (see Fig. 8). Since the design of the Elastomer sealing material makes it shaped as the thread, the Elastomer sealing material is not "chewed" between the threads of the fittings during installation, but merely squeezed enough to fill the gap between the threads. This design makes sure that the Elastomer material is not removed from the threads or damaged during assembly or disassembling, thus removing the risk of leakage after installation and the requirement for applying new sealing materials when re-assembled.

## Claims

1. A method for producing a fitting with sealing material utilizing a two stage injection process being **characterized by** the following two stages with two different materials:
- A first stage of the injection process using plastic material and forming a body and the thread of the fitting with the technical properties required according to standards with respect to strength and hardness, in order to ensure sealing between the thread of the fitting and a second fitting when they are assembled; and
- A second stage, during which the elastomer sealing material is added on the thread and is adhered to the body by the heat of the melted elastomer sealing material, so that the two materials become attached.

2. The method according to claim 1,
wherein a supportive thread to be situated under the elastomer material is created at the body during the first injection stage, wherein the supportive thread has a smaller diameter than the neighboring portions of the thread, wherein the elastomer sealing material being then injected on top of this supportive thread in the second injection stage, with a height higher than the neighboring portions of the thread, in order for the elastomer sealing material to fill the gap between the thread of the fitting and a second fitting when they are assembled, thus ensuring proper sealing between the two fittings.

3. A fitting,
comprising a body made of plastic material with a thread and an elastomer sealing material,
wherein the body further comprises a supportive thread has a smaller diameter than the neighboring portions of the thread,
wherein the elastomer sealing material is adhered to the supportive thread and has a height higher than the normal thread, e.g. has a larger diameter than the neighboring portions of the thread.

## Patentansprüche

1. Verfahren zur Herstellung eines Formstücks mit Dichtungsmaterial unter Verwendung eines zweistufigen Spritzverfahrens, **gekennzeichnet durch** die folgenden zwei Stufen mit zwei unterschiedlichen Materialien:
- eine erste Stufe des Spritzverfahrens unter Verwendung von Kunststoffmaterial und Bildung eines Körpers und des Gewindes des Formstücks mit den technischen Eigenschaften, welche nach den Standards hinsichtlich Festigkeit und Härte erforderlich sind, um eine Abdichtung zwischen dem Gewinde des Formstücks und einem zweiten Formstück im zusammengebauten Zustand zu gewährleisten; und
- eine zweite Stufe, während der das elastomere Dichtungsmaterial auf das Gewinde hinzugefügt und durch die Wärme des geschmolzenen elastomeren Dichtungsmaterials an den Körper angefügt wird, so dass die beiden Materialien angebracht werden.

2. Verfahren nach Anspruch 1,
wobei während der ersten Einspritzphase ein Stützgewinde, das unter dem elastomeren Material angeordnet ist, am Körper erzeugt wird, wobei das Stützgewinde einen kleineren Durchmesser als die benachbarten Abschnitte des Gewindes aufweist,
wobei das elastomere Dichtungsmaterial dann in der zweiten Einspritzphase auf dieses Stützgewinde mit einer Höhe, die größer ist als die benachbarten Abschnitte des Gewindes, eingespritzt wird, damit das elastomere Dichtungsmaterial den Spalt zwischen dem Gewinde des Formstücks und einem zweiten Formstück beim Zusammenbau ausfüllt und so eine geeignete Abdichtung zwischen den beiden Formstücken gewährleistet ist.

3. Formstück,
umfassend einem Körper aus Kunststoffmaterial mit einem Gewinde und einem elastomeren Dichtungsmaterial,
wobei der Körper ferner ein Stützgewinde umfasst, das einen kleineren Durchmesser als die benachbarten Abschnitte des Gewindes aufweist,
wobei das elastomere Dichtungsmaterial an dem Stützgewinde angefügt wird und eine Höhe aufweist, die größer ist als das normale Gewinde, d. h. einen größeren Durchmesser als die benachbarten Abschnitte des Gewindes aufweist.

## Revendications

1. Procédé de fabrication d'un raccord avec un matériau d'étanchéité par un processus d'injection en deux étapes,
**caractérisé par** les deux étapes suivantes utilisant deux matériaux différents :
- une première étape du processus d'injection utilisant une matière plastique pour former un corps et le filetage du raccord, présentant les propriétés techniques requises conformément aux normes relatives à la résistance et à la dureté, afin d'assurer l'étanchéité entre le filetage du raccord et un deuxième raccord lorsqu'ils sont assemblés ; et
- une deuxième étape, au cours de laquelle le matériau d'étanchéité élastomère est appliqué sur le filetage et adhère au corps par la chaleur du matériau d'étanchéité élastomère fondu, de sorte que les deux matériaux se lient.

2. Procédé selon la revendication 1,
dans lequel un filetage de support devant être situé sous le matériau élastomère est créé au niveau du corps pendant la première étape d'injection, le filetage de support ayant un diamètre inférieur à celui des parties adjacentes du filetage,
le matériau d'étanchéité élastomère est ensuite injecté par-dessus ledit filetage de support dans la deuxième étape d'injection, avec une hauteur supérieure à celle des parties adjacentes du filetage, afin que le matériau d'étanchéité élastomère remplisse l'interstice entre le filetage du raccord et un deuxième raccord lorsqu'ils sont assemblés, assurant ainsi une étanchéité appropriée entre les deux raccords.

3. Raccord comprenant un corps réalisé en matière plastique avec un filetage et en un matériau d'étanchéité élastomère,
dans lequel le corps comprend en outre un filetage de support dont le diamètre est inférieur à celui des parties adjacentes du filetage,
le matériau d'étanchéité élastomère adhère au filetage de support et présente une hauteur supérieure à celle du filetage normal, par exemple un diamètre supérieur à celui des parties adjacentes du filetage.
